# EUROPÄISCHE PATENTSCHRIFT

(11) **EP 0 599 030 B1**
(45) Veröffentlichungstag und Bekanntmachung des Hinweises auf die Patenterteilung: **05.11.1997**
(21) Anmeldenummer: 93116029.5
(22) Anmeldetag: 05.10.1993
(51) Int. Cl.: F04C 2/08, F01C 21/02

(54) **Zahnradpumpe und deren Verwendungen**
Gear pump and its uses
Pompe à engrenages et ses utilisations

(30) Priorität: 23.10.1992 CH 3304/92
(43) Veröffentlichungstag der Anmeldung: 01.06.1994
(73) Patentinhaber: Maag Pump Systems Textron AG, 8023 Zürich (CH)
(72) Erfinder: Mischler, Eduard, Ing. HTL, CH-8105 Regensdorf (CH); Stehr, Roger, Dr. Ing., CH-8180 Bülach (CH)
(74) Vertreter: Troesch Scheidegger Werner AG

(56) Entgegenhaltungen:
- EP-A- 0 028 061
- EP-A- 0 158 901
- EP-A- 0 509 218
- EP-A- 0 535 295
- DE-A- 3 922 720
- DE-A- 4 125 128
- DE-U- 9 011 156
- US-A- 3 131 643
- US-A- 3 512 906

## Beschreibung

Die vorliegende Erfindung betrifft eine Zahnradpumpe nach dem Oberbegriff von Anspruch 1 und deren Verwendungen.

Für Kompressoren, Gebläse und Pumpen, insbesondere Schraubenpumpen, ist es aus der US-PS-2 679 412 bekannt, die Welle mittels Wälzlagern zu lagern. Zwischen einem Innenring und einem Wellenbund, an dem ein Pumpenrotor abgestützt ist, sind ein unmittelbar neben dem Lager angeordneter Oelabschleuderring, eine Abstandsbüchse und ein am Wellenbund anliegender Dichtungsgegenring angeordnet, die mit dem Innenring zu einer gemeinsam mit der Welle umlaufenden Baugruppe zusammengespannt sind.

In einem Lager- und Dichtungsgehäuse, das diese Baugruppe umschliesst, sind zwischen dem Wälzlager und dem Dichtungsgegenring zwei Gleitringe gleichachsig angeordnet, die, von am Gehäuse abstützenden Federn belastet, an der vom Pumpenrotor abgewandten Stirnfläche des Gegenringes anliegen. Die beiden Gleitringe begrenzen einen ringförmigen Zwischenraum, in den eine Schmierfluidleitung einmündet.

Im weiteren ist der Einsatz von Wälzlagern für Zahnradpumpen an sich bekannt, wozu beispielsweise verwiesen sei auf folgende US-Schriften:
3 309 997
3 131 643
3 133 506
3 512 906
1 370 923
1 798 797
4 134 713
3 473 474
3 156 191
3 172 366

Solche Pumpen lassen sich sowohl für die Medienförderung bei Raumtemperatur einsetzen als auch, wie z.B. aus der nachveröffentlichten EP-A 535 295 bekannt, für die Förderung von Kautschuk, was bei Temperaturen von 90°C bis 120°C erfolgt.

An sich weist der Einsatz von fremdgeschmierten Wälzlagern für die Pumpenrotoren des wesentlichen Vorteil auf, dass die Wellenlagerung von den Schmiereigenschaften des geförderten Polymers vollständig unabhängig erfolgt. Selbstverständlich setzt dies eine absolute Trennung von Wälzlagern und Fördermedien voraus. Daneben sind ausserhalb des Förderstromes angeordnete Wälzlager für Wartungs- und Servicezwecke leichter zugänglich, als im Schmelzestrom liegende Gleitlager, wo eine Demontage nur im heissen Zustand möglich ist.

Aus der EP-A-0 158 901 sind Wälzlager bekannt, woran Lagerelemente aus keramischem Material gefertigt sind.

Schliesslich ist aus der DE-U-90 11 156 eine Zahnradpumpe bekannt, bei der Kegelrollenlager als Wälzlager durch eine Kombination von Rückfördergewinde, Dichtringen, beispielsweise O-Ringen, einem Trennraum und einem Simmenring gegen das zu fördernde Medium abgedichtet sind. Der Trennraum ist mit Schmiermittel gefüllt und durch eine Öffnung nach aussen zugänglich. Sollte dabei durch Verschleiss der Dichtringe das Fördermedium in den Trennraum eindringen, so tritt das Schmiermittel aus dem Trennraum durch die Öffnung aus, wodurch man frühzeitig einen Schaden erkennen kann.

Nachteilig an dieser Pumpe ist die Kompliziertheit der Dichtungsanordnung und insbesondere, dass höchst verschleissanfällige Dichtringe vorgesehen sind und zudem ein Schmiermedium-gefüllter Trennraum.

Aufgabe der vorliegenden Erfindung ist es, diese Nachteile zu beheben. Dies wird durch Weiterbildung der eingangs genannten Pumpe nach dem Wortlaut des kennzeichnenden Teils von Anspruch 1 erreicht.

Dabei werden Pumpen dieser Art für die Förderung von Medien bei hohen Temperaturen weitergebildet, um die erwähnten Vorteile wälzgelagerter Zahnradpumpen auch bei solchem Einsatz ausnützen zu können.

Für Zahnradpumpen nämlich, insbesondere Zahnradpumpen, die hochviskose Flüssigkeiten, wie z.B. Polymerschmelzen mit Differenzdrücken in der Grössenordnung bis etwa 500 bar fördern, bei Temperaturen > 200°C, ist es bis heute üblich, die Rotorwellen in mediengeschmierten Gleitlagern zu lagern.

Insbesondere für den Einsatz der erfindungsgemässen Zahnradpumpen zur Förderung eines stark abrasiven Fördermediums, wie hochgefüllter Kunststoffmassen, wird zwischen Wälzlager und Zahnrädern also je eine Labyrinthdichtung vorgesehen. Dadurch wird verhindert, dass Fördermedium aus dem Förderraum in die Wälzlager eindringt, und zwar mit Dichtungsmitteln, welche die Anzahl vorzusehender Bauteile am Lager nicht erhöhen.

Bei Zahnradpumpen ist im Unterschied zu Schraubenpumpen der grösste Wellendurchmesser in der Regel kleiner als der Zahnfuss-Durchmesser der mediumfördernden Zahnräder. Von daher betrachtet, ist die Eigensteifigkeit der Wellen begrenzt. Jede Durchbiegung der Wellen hat aber zur Folge, dass die Eingriffsverhältnisse der miteinander kämmenden, mediumfördernden Zahnräder sowie die Wirkung vorgesehener Wellendichtungen sich verschlechtern, wodurch sich die Lebensdauer der Zahnräder und der Wellenlager verringert.

Umso erstaunlicher ist es, dass die erfindungsgemässe Anordnung und Ausbildung der Lagerung ohne weiteres zulässt, die erwähnten Druck- und insbesondere auch Temperatur-Beanspruchungen mittels wälzgelagerter Rotorwellen aufzunehmen.

Es ist besonders an die Förderung von hochviskosen, abrasiven Medien gedacht, wie sie z.B. hochgefüllte Polymerschmelzen darstellen. Ein Fördermedium-geschmiertes Gleitlager ist bei solchen Fördermedien und Differenzdrücken von bis zu 500 bar einem wirtschaftlich nicht mehr vertretbaren Verschleiss ausgesetzt. Durch erfindungsgemässe Lagerung wird eine Lagerung geschaffen, welche von den Schmiereigenschaften des geförderten Polymers vollständig unabhängig ist. Dies deshalb, weil die vorgesehenen Wälzlager nicht mit dem Fördermedium in Kontakt kommen, sondern gemäss Wortlaut von Anspruch 3 geschmiert sind.

Die Wälzlager kommen mit dem Fördermedium selbst nicht in Berührung. Dadurch wird eine Anwendung der Zahnradpumpe für hochviskose, abrasive Medien, wie sie z.B. hochgefüllte Polymerschmelzen darstellen, wirtschaftlich ermöglicht.

Es werden wirtschaftliche Standzeiten mit der erfindungsgemassen Lagerung, unter Berücksichtigung, dass die Schmelzetemperaturen über 300°C betragen können, erhalten.

Vorzugsweise werden die in Anspruch 2 aufgeführten Lagermaterialpaarungen eingesetzt.

Insbesondere wird, wie erwähnt, dem Wortlaut von Anspruch 3 folgend, kein externer Schmiermediumkreislauf vorgesehen, sondern es werden die Wälzlager nicht oder lediglich durch einen im Lager verbleibenden Schmierstoff geschmiert. Vorzugsweise wird eine Feststoffschmierung vorgesehen.

Um im weiteren die Durchbiegung der Wellen zu minimalisieren, wird vorgeschlagen, die Pumpe nach dem Wortlaut von Anspruch 4 zu konzipieren.

Dadurch, dass, dem Wortlaut von Anspruch 5 folgend, die Labyrinthdichtungen mittels eines Wärmetransportmediums temperierbar sind, ergibt sich die Möglichkeit, ihre Dichtwirkung zu optimieren, unter Berücksichtigung der wechselnden Wärmebelastung, wie beispielsweise bedingt durch unterschiedliche Betriebspunkte der Zahnradpumpe.

Bezüglich des Aufbaus und der Wirkung der erwähnten Labyrinthdichtungen wird auf "Hydrodynamische Dichtung für rotierende Wellen", Prof.i.R. E.F. Bohn et al., Chemie-IngenieurTechnik, 31. Jahrg., 1959, S. 202 ff., verwiesen, wie auch beispielsweise auf die US-PS-4 336 213.

Im weiteren wird die Wirkung der Labyrinthdichtung nach dem Wortlaut von Anspruch 6 bevorzugt.

Dem Wortlaut von Anspruch 7 folgend, ist der Ringspalt vorzugsweise nach unten offen.

Dem Wortlaut von Anspruch 8 folgend, sind an einer solchen Pumpe beide Pumpenwellen getrennt, beispielsweise über ein externes Verteilgetriebe, antreibbar, oder es wird nur einer der Rotoren abgetrieben.

Eine solche erfindungsgemässe Zahnradpumpe eignet sich insbesondere für abrasive, hochviskose Medien, wie sie z.B. hochgefüllte Polymerschmelzen darstellen. Als Füll- und Verstärkungsstoffe sind hier u.a. Glasfasern, Carbonfasern sowie Mineralien, wie Quarzsand, Schiefermehl oder Kreide, gebräuchlich.

Die Erfindung wird anschliessend anhand einer Figur erläutert.

Sie zeigt schematisch einen Längsschnitt durch eine Zahnradpumpe.

In einem Pumpengehäuse 1 sind zwei Zahnräder 3ₐ und 3_{b} je beidseitig an Wellen 5ₐ₁, 5ₐ₂ bzw. 5_{b1} und 5_{b2} gelagert. Wellen und Zahnrad bilden den Rotor.

Da gemäss der dargestellten Ausführungsform alle Rotorwellen gleich gelagert sind, wird nachfolgend nur eine Welle mit ihrer Lagerung beschrieben.

Die Welle 5ₐ₁ läuft mit ihrem Zahnrad-nächsten, grossdurchmessrigen Abschnitt 9 durch eine in bekannter Art und Weise aufgebaute Labyrinthdichtung 11, deren Förderwirkung, wie beispielsweise aus obgenanntem Artikel "Hydrodynamische Dichtung" bekannt, wie mit F dargestellt, vorzugsweise vom Zahnrad 3ₐ weg weist.

Der Labyrinthdichtungsblock 13 weist ein Kanal- bzw. Leitungssystem 15 für ein Wärmetransportmedium auf. Dadurch kann die Temperatur im Bereich der Labyrinthdichtung 11 beeinflusst werden.

In Axialrichtung von der Dichtung 11 nach aussen schreitend, umgreift ein Ringspalt 17, anschliessend an den Labyrinthdichtungsblock 13, den grossdurchmessrigen Wellenabschnitt 9. Es kommunizieren die Ringspalten 17 übereinanderliegender Rotorwellen 5ₐ, 5_{b}, und es ist eine nach unten ragende Ausfallöffnung 19 vorgesehen. Fördermedium, welches durch die Labyrinthdichtung 11 axial nach aussen dringt, fällt durch den Ringspalt 17 und weiter durch Oeffnung 19 aus, bevor es in den Bereich der noch zu beschreibenden Wellenlagerung gelangen kann.

Auf dem an den Spalt 17 anschliessenden Wellenabschnitt 21, gegenüber dem Abschnitt 9 verringerten Durchmessers, ist einerseits eine Distanzhülse 23 aufgezogen, an welche sich der Innenring 25 eines Wälzlagers 27 anschliesst. Der Aussenring 29 des Wälzlagers 27 ist im Pumpendeckel 31 fixiert. Wälzelemente in Form von Lagerzylindern 33 oder gegebenenfalls von Lagerkugeln stützen den Wellenabschnitt 21 am Pumpendeckel 31 ab.

Axial anschliessend, ist zur axialen Fixierung des Innenringes 25 auf der Welle 5ₐ eine Wellenmutter 35 aufgeschraubt. Das komplette Wälzlager 27 wird schliesslich gegen aussen durch einen Lagerdeckel 37 abgeschlossen.

Die Lageroberflächen von Lagerinnenring 25 und/oder Lageraussenring 29 und/oder der Wälzelemente 33, vorzugsweise alle Lageroberflächen, bestehen aus einem hochtemperaturbeständigen Stahl, wie z.B. aus einem Schnellarbeitsstahl S6-5-2 oder aber bevorzugterweise aus einem keramischen Werkstoff, beispielsweise aus Siliziumnitrid Si₃N₄.

Insbesondere bei dieser Ausführungsvariante mit keramischen Lagerflächen wird auf einen externen Schmiermediumkreis zum Lager 27 verzichtet. Es wird bevorzugterweise eine Feststoffschmierung vorgesehen.

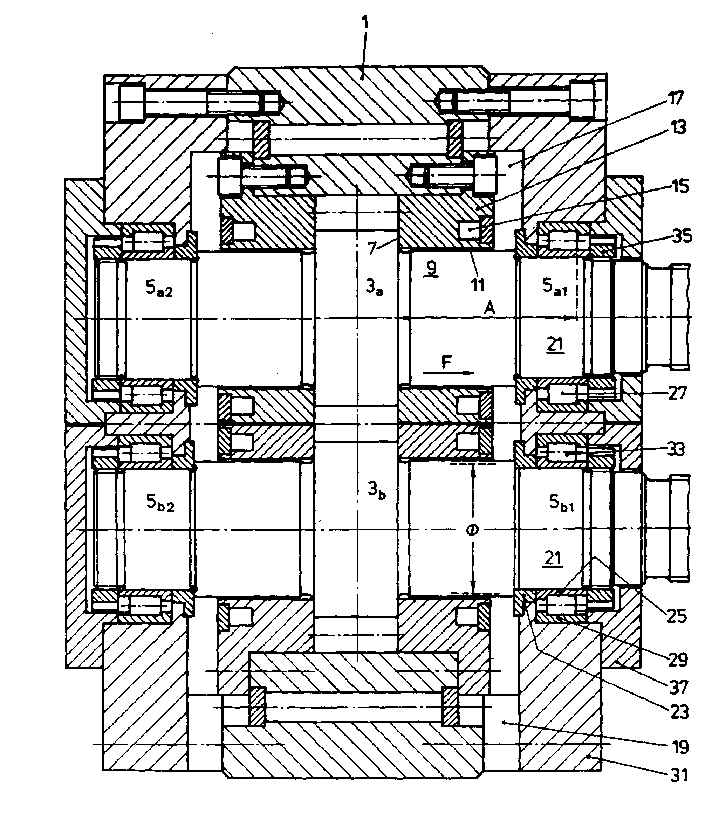

Zur Minimalisierung der Wellendurchbiegung wird weiter der Abstand A zwischen Zahnradstirnfläche und dem Auflagebereich der Welle, gegeben durch den äusseren Kontaktpunkt im Wälzlager, kleiner gewählt als das Zweifache des in der Figur gestrichelt eingetragenen, mittleren Wellendurchmessers Φ.

Die dargestellte erfindungsgemässe Zahnradpumpe mit der erfindungsgemässen Lageranordnung eignet sich insbesondere und vor allem für das Fördern von hochviskosen, abrasiven Medien, wie sie hochgefüllte lymerschmelzen darstellen. Beide Rotoren können dabei getrennt via ein externes, nicht dargestelltes Verteilgetriebe angetrieben werden, oder es kann nur einer der Rotoren angetrieben werden.

Damit kann ein und dieselbe Pumpe im Temperaturbereich von Raumtemperaturen bis über 200°C und gar bis über 300°C eingesetzt werden.

## Patentansprüche

1. Zahnradpumpe mit wälzgelagerten Rotoren, bei denen Dichtungsanordnungen zwischen den Zahnrädern (3) und den Wälzlagern (25, 29, 33) Labyrinthdichtungen (11) umfassen und zwischen letzteren und den Wälzlagern (25, 29, 33) die Wellen (5) je von mindestens einem Ringspalt (17) umgeben sind, dadurch gekennzeichnet, dass die Labyrinthdichtungen direkt an den jeweiligen als Fangraum für Fördermedium ausgebildeten Ringraum angrenzen und dass die Lagerflächen der Lagerinnen-(25) und/oder -Aussenringe (29) und/oder der Wälzelemente (33) aus einem hochtemperaturbeständigen Stahl oder einem keramischen Werkstoff bestehen.

2. Zahnradpumpe nach Anspruch 1, dadurch gekennzeichnet, dass als hochtemperaturbeständiger Stahl S6-5-2, als keramischer Werkstoff Siliziumnitrid Si₃N₄ eingesetzt ist.

3. Zahnradpumpe nach einem der Ansprüche 1 oder 2, dadurch gekennzeichnet, dass die Wälzlager (25, 29, 33) nicht oder durch einen im Lager verbleibenden Schmierstoff, vorzugsweise eine Feststoffschmierung, geschmiert sind.

4. Pumpe, nach einem der Ansprüche 1-3, dadurch gekennzeichnet, dass der Abstand (A) der gelagerten Wellen (5) von Zahnradstirnfläche (7) zum Auflagebereich der Welle, gegeben durch den äusseren Kontaktpunkt im Wälzlager (27), kleiner ist als der doppelte, mittlere Durchmesser (Φ) der Welle (5) entlang dieser Strecke.

5. Zahnradpumpe nach einem der Ansprüche 1-5, dadurch gekennzeichnet, dass der Trägerkörper (13) der Labyrinthdichtung (11) mit einem Leitungssystem (15) für ein Wärmetransportmedium versehen ist.

6. Zahnradpumpe nach einem der Ansprüche 1-5, dadurch gekennzeichnet, dass die Förderrichtung (F) der Labyrinthdichtung (11) von den Zahnrädern (3) gegen die Wälzlager (25, 29, 33) weist.

7. Zahnradpumpe nach einem der Ansprüche 1-6, dadurch gekennzeichnet, dass der Ringspalt (17) nach unten offen ist.

8. Zahnradpumpe nach einem der Ansprüche 1-7, dadurch gekennzeichnet, dass ihre Rotoren getrennt angetrieben sind, beispielsweise über ein externes Verteilgetriebe oder nur einer ihrer Rotoren extern angetrieben ist.

9. Verwendung der Pumpe nach einem der Ansprüche 1-8 für abrasive Medien.

10. Verwendung nach Anspruch 9 für hochviskose Polymerschmelzen.

11. Verwendung nach Anspruch 9 oder 10 für hochgefüllte Polymerschmelzen.

12. Verwendung der Pumpe nach einem der Ansprüche 1-8 für die Förderung von Medien bei Temperaturen über 200°C.

13. Verwendung nach Anspruch 12 für die Förderung von Medien bei Temperaturen über 300°C.

## Claims

1. A gear pump with rotors mounted on rolling bearings, wherein sealing devices between gears (3) and the rolling bearings (25, 29, 33) comprise labyrinth seals (11) and between the latters and the rolling bearings (25, 29, 33) the shafts (5) are surrounded by at least one annular gap (17), characterised in that the labyrinth seals are directly adjacent to the respective annular gaps formed as collecting gaps for a conveyed product, and in that the bearing surfaces of the bearing inner (25) and/or outer ring (29) and/or of the rolling elements (33) are made up of steel with high temperature stability or ceramic material.

2. The gear pump according to claim 1, characterised in that S6-5-2 is used as a steel with high temperature stability, and silicon nitride as a ceramic material.

3. The gear pump according to claim 1 or 2, characterised in that the rolling bearings (25, 29, 33) are not lubricated or are lubricated by a lubricant which stays in the bearing, preferably a solid lubricant.

4. The pump according to one of claims 1 to 3, characterised in that the length (A) of the mounted shafts (5) situated between gear front surface (7) and the supporting surface of the shaft and defined by the outer contact point in the rolling bearing (27) is smaller than the double average diameter (Φ) of the shaft (5) along said length.

5. The gear pump according to one of claims 1 to 5, characterised in that the supporting member (13) of the labyrinth seal (11) is provided with a duct system (15) for a heat transfer medium.

6. The gear pump according to one of claims 1 to 5, characterised in that the transport direction (F) of the labyrinth seal (11) extends from the gears (3) towards the rolling bearings (25, 29, 33).

7. The gear pump according to one of claims 1 to 6, characterised in that the annular gap (17) is open to the bottom.

8. The gear pump according to one of claims 1 to 7, characterised in that its rotors are driven separately, for example by means of an external transfer case, or only one of its rotors is driven externally.

9. An application of the pump according to one of claims 1 to 8 for abrasive products.

10. The application according to claim 9 for very viscous polymer meltings.

11. The application according to claim 9 or 10 for polymer meltings with a large quantity of filler.

12. The application of the pump according to one of claims 1 to 8 for conveying products with temperatures over 200°C.

13. The application according to claim 12 for conveying products with temperatures over 300°C.

## Revendications

1. Pompe à engrenages comportant des rotors montés sur paliers à roulement, pour lesquels des dispositifs d'étanchéité prévus entre les roues dentées (3) et les paliers à roulement (25, 29, 33) comprennent des joints-labyrinthes (11), et entre ces derniers et les paliers à roulement (25, 29, 33), les arbres (5) sont entourés chacun par au moins un passage annulaire (17), caractérisée en ce que les joints-labyrinthes sont directement voisins des passages annulaires respectifs conçus comme des espaces collecteurs pour le produit transporté, et en ce que les surfaces de palier des bagues de palier intérieure (25) et/ou extérieure (29) et/ou des éléments à roulement (33) se composent d'un acier à haute résistance thermique ou d'un matériau céramique.

2. Pompe à engrenages selon la revendication 1, caractérisée en ce qu'on utilise comme acier à haute résistance thermique S6-5-2, et comme matériau céramique du nitrure de silicium Si₃N₄.

3. Pompe à engrenages selon la revendication 1 ou 2, caractérisée en ce que les paliers à roulement (25, 29, 33) ne sont pas lubrifiés ou sont lubrifiés à l'aide d'un lubrifiant qui reste dans le palier, de préférence à l'aide d'un lubrifiant solide.

4. Pompe selon l'une des revendications 1 à 3, caractérisée en ce que la longueur (A) des arbres montés (5) située entre la surface frontale de roue dentée (7) et la zone d'appui de l'arbre et définie par le point de contact extérieur dans le palier à roulement (27) est inférieure au double du diamètre moyen (Φ) de l'arbre (5) sur cette longueur.

5. Pompe à engrenages selon l'une des revendications 1 à 5, caractérisée en ce que le corps de support (13) du joint-labyrinthe (11) est pourvu d'un système de conduits (15) pour un agent caloporteur.

6. Pompe à engrenages selon l'une des revendications 1 à 5, caractérisée en ce que le sens de transport (F) du joint-labyrinthe (11) va des roues dentées (3) vers les paliers à roulement (25, 29, 33).

7. Pompe à engrenages selon l'une des revendications 1 à 6, caractérisée en ce que le passage annulaire (17) est ouvert vers le bas.

8. Pompe à engrenages selon l'une des revendications 1 à 7, caractérisée en ce que ses rotors sont entraînés séparément, par exemple grâce à une transmission de transfert externe, ou un seul de ses rotors est entraîné par voie externe.

9. Utilisation de la pompe selon l'une des revendications 1 à 8 pour des produits abrasifs.

10. Utilisation selon la revendication 9 pour des matières polymères en fusion très visqueuses.

11. Utilisation de la pompe selon la revendication 9 ou 10 pour des matières polymères en fusion contenant une grande quantité de matière de charge.

12. Utilisation de la pompe selon l'une des revendications 1 à 8 pour le transport de produits à des températures supérieures à 200°C.

13. Utilisation selon la revendication 12 pour le transport de produits à des températures supérieures à 300°C.
